# EUROPEAN PATENT SPECIFICATION

(11) **EP 3 505 457 B1**
(45) Date of publication and mention of the grant of the patent: **26.04.2023**
(21) Application number: 18248059.0
(22) Date of filing: 27.12.2018
(51) Int. Cl.: A23C 3/00, B65B 55/14, A23D 7/06, A23C 13/08, A23C 19/097

(54) **PRODUCING AN ASEPTIC FOOD PRODUCT**
HERSTELLUNG EINES ASEPTISCHEN NAHRUNGSMITTELPRODUKTS
FABRICATION D'UN PRODUIT ALIMENTAIRE ASEPTIQUE

(30) Priority: 29.12.2017 EP 17211115
(43) Date of publication of application: 03.07.2019
(73) Proprietor: Tetra Laval Holdings & Finance S.A., 1009 Pully (CH)
(72) Inventor: Oestengaard, Svend Erik, 2000 Frederiksberg (DK); Abelha, Kamila, 21578 Malmö (SE)
(74) Representative: Tetra Pak - Patent Attorneys SE

(56) References cited:
- EP-A1- 0 340 857
- JP-B1- 4 846 865
- US-A- 5 738 891
- US-A1- 2004 241 305
- US-A1- 2011 151 081
- US-A1- 2013 045 315

## Description

### Technical Field

The invention relates to producing aseptic food products.

### Background

Today many different techniques are used for producing a large variety of food products. Packing the food products and distributing them safely to consumers is often of critical importance, in particular when there is a risk of microbiological growth in the products in case it is not handled correctly. For reducing health risks, many types of food are aseptically produced and packaged. The food product can then often be stored for several months at ambient temperature conditions, without risking that microorganisms starts to grow in the food and reach levels that can be harmful when the food is consumed by eating or drinking. Some related prior art is reflected in patent document US2011/0151081A1.

Several techniques for aseptically producing and packing food are currently successfully employed. However, since the types and varieties of available food is ever increasing and evolving, there is also a need for improving and developing the related production techniques, to ensure that the food can be produced and distributed in a cost efficient manner. To achieve this, specific production methods must be continuously developed for new food products, in particular for dairy based food products.

### Summary

It is an object of the invention to at least partly overcome one or more limitations of the prior art. In particular, it is an object to provide a method for producing an aseptic food product, where the production has been optimized in view of the ingredients that form the food.

In one aspect of the invention, this is achieved by a method for producing an aseptic food product, which method comprises mixing, in a mixer unit, ingredients into a mixture comprising: 20-35 wt% fat that comprises any combination of vegetable fat and milk fat; 8-12 wt% milk protein; 0,5-3 wt% thickener; 0,5-2,5 wt% acidifier comprising or consisting of any combination of Glucono-Delta-Laction and citric acid; 0,5-4,5 wt% flavorer; and water that balances the mixture. The mixture is heat treated in a heat exchanger, such that a heat treated, aseptic mixture is obtained, and the heat treated mixture is filled in packages that are aseptically sealed, such that the heat treated mixture forms an aseptic food product inside the packages.

The method is advantageous in that it may provide a food product in form of spreadable cheese, which can be manufactured very efficiently and stored at ambient temperature for a long time.

A system for producing an aseptic food product is also described. The system comprises a mixer unit arranged to mix ingredients into a mixture comprising: 20-35 wt% fat that comprises any combination of vegetable fat and milk fat; 8-12 wt% milk protein; 0,5-3 wt% thickener; 0,5-2,5 wt% acidifier; 0,5-4,5 wt% flavorer; and water that balances the mixture. The system has a heat exchanger that is arranged to heat treat the mixture, such that a heat treated, aseptic mixture is obtained, and a filling machine that is arranged to fill the heat treated mixture in packages that are aseptically sealed, such that the heat treated mixture forms an aseptic food product inside the packages.

All features and embodiments described herein in connection with the method may be implemented for the system, and vice versa.

Still other objectives, features, aspects and advantages of the invention will appear from the following detailed description as well as from the drawings.

### Drawings

Embodiments of the invention will now be described, by way of example, with reference to the accompanying schematic drawings, where
Fig. 1 is a schematic view of a system for producing an aseptic food product, and
Fig. 2 is a flow chart illustrating a method for producing an aseptic food product.

### Detailed Description

Embodiments of the invention will now be described more fully hereinafter with reference to the accompanying drawings, in which some, but not all, embodiments of the invention are shown. The invention may be embodied in many different forms and should not be construed as limited to the embodiments set forth herein.

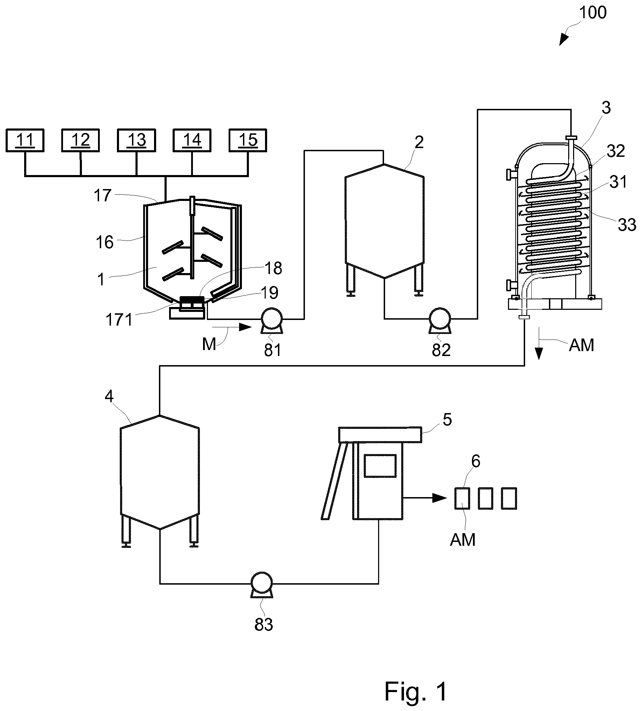

With reference to Fig. 1 a system 100 for producing an aseptic food product is illustrated. The system 100 has a mixer unit 1. The mixer unit 1 has a tank 17, a rotor 18 and a stator 19 that are arranged at a bottom 171 of the tank 17 to accomplish mixing of ingredients 11-15 that are introduced into the mixer unit 1. The ingredients 11-15 form a mixture M after they have been mixed in the mixer unit 1. The ingredients 11-15 are held in containers that are connected to the tank 17 for supplying the ingredients into the mixer unit 1. A suction pump (not shown) is connected to draw air from the tank 17, such that a sub-atmospheric pressure can be provided inside the mixer unit 1. A jacket 16 is arranged around the tank 17, such that a content of the mixer unit 1 can be given a desired temperature, by e.g. supplying heating water, steam, or cooling water through the jacket 16.

A first pump 81 is connected to the mixer unit 1 to feed a content of the mixer unit 1, typically the mixture M, to a holding tank 2. Alternatively, the mixture M can be transported or transferred in batches from the mixer unit 1 to the holding tank 2, for example by emptying the mixture M into the holding tank 2. When the desired amount of mixture M is obtained in the holding tank 2, then a second pump 82 is arranged to pump the mixture M from the holding tank 2 and through a heat exchanger 3. The heat exchanger 3 is preferably a coil heat exchanger, having a pipe 31 that runs in a spiral shaped manner around a core 32 of the heat exchanger 3. The mixture M passes through a pipe 31 (coil) inside the heat exchanger and baffles 33 direct a heating media along the spiral shaped (coiled) pipe 31. The mixture M is then heat treated inside the heat exchanger 3, such that the mixture M is transferred into a heat treated, aseptic mixture AM.

A second holding tank 4 is connected to an outlet of the heat exchanger 3, to thereby receive the heat treated mixture AM after it has left the heat exchanger 3. A third pump 83 is arranged to pump the heat treated mixture AM from the second holding tank 4 to a filling machine 5 that is arranged to fill the heat treated mixture AM in packages that are aseptically sealed by the filling machine 5, such that the heat treated mixture AM forms an aseptic food product inside the sealed packages 6.

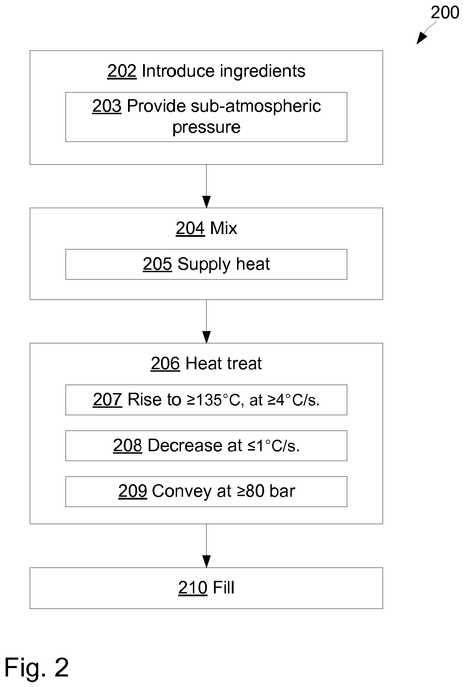

With reference to Fig. 2, a flow chart illustrating a method 200 for producing an aseptic food product is illustrated. The method 200 may be performed on, for example, the system 100 described in connection with Fig. 1.

The method 200 comprises introducing 202 and mixing 204, in the mixer unit 1, ingredients 11-15 into a mixture M. The ingredients may be as follow: 20-35 wt% fat that comprises any combination of vegetable fat and milk fat, 8-12 wt% milk protein, 0,5-3 wt% thickener, 0,5-2,5 wt% acidifier, 0,5-4,5 wt% flavorer, and water that balances the mixture M. This means that the mixture M is given this composition, as it is made of the ingredients. The mixture M has a high viscosity due to the relatively large amount of solids in the mixture M. Typically, the mixture M is not liquid, but has the form (texture) of a spreadable paste.

The mixture M is heat treated 206 in the heat exchanger 3, such that a heat treated, aseptic mixture AM is obtained.

Sub-atmospheric pressure is provided 203 inside the mixer unit 1 when introducing 202 into the mixer unit 1 ingredients that have powder form. For example, the milk protein and the thickener typically have the form of powders. The sub-atmospheric pressure may be less than 800 mbar. The mixture M may be void of preservation agents. Generally, no preservation agent (preservatives) is among the ingredients added into the mixture M. The mixture M is substantially lactose free, i.e. lactose that naturally might be present in any ingredient is reduced by at least 85%.

The mixing 204 comprises supplying heat 205 through the heating jacket 16 of the mixer unit 1, such that the mixture M is given a temperature of 50°C to 60°C. This may be accomplished by pumping an appropriate amount of heating fluid through the jacket 16.

The heat treating 206 inside the heat exchanger 3 may comprise rising 207 the temperature of the mixture M to a temperature of at least 135°C, at a rate of at least 4°C per second. The heat treating 206 may also comprise decreasing 208 the temperature of the mixture M, after the mixture M has reached a maximum temperature, at a rate that is less than 1°C per second. Such decrease may be accomplished by actively or passively cooling the mixture M inside the heat exchanger 3. For this purpose the heat exchanger 3 may have one or more dedicated flow channels for a cooling media, while another channel is provided for the heating media. The heat treating 206 may comprise conveying 209 the mixture M through the heat exchanger 3 at a pressure of at least 80 bar. Such conveying at this pressure is done through all or through at least a part of the heat exchanger 3. The pressure may be accomplished with the second pump 82.

After the heating treating 206, the heat treated mixture AM is filled 210 in packages 6 and the packages are aseptically sealed, such that the heat treated mixture AM forms an aseptic food product inside the packages 6. The heat treating 206 and the filling 210 provides for that the mixture AM in the aseptically sealed packages 6 has a shelf life of at least 150 days when stored at an ambient temperature of at least 15°C.

Regarding the ingredients, the fat may be all vegetable fat (Kristal Special AKK). It may be vegetable fat that is mixed with milk based fat such as butter fat. The milk protein may have the form of one or both of skimmed milk powder or Nutrilac^{®} CH-8313. The thickener (stabilizer) may be any combination of Grindsted CH 315 (Dupont), emulsifying salt Solva 85 (ICL) and emulsifying salt Joha T New (ICL). The thickener may comprise or consist of any combination of Grindsted CH 315 (Dupont), emulsifying salt Solva 85 (ICL) and emulsifying salt Joha T New (ICL). The acidifier may be a combination or one of GDL (Glucono-Delta-Laction) and/or citric acid. The acidifier may comprise or consist of any combination of GDL (Glucono-Delta-Laction) and citric acid. The flavorer may be any suitable flavorer, such as EMC Mozzarella MZG-8518 (Jeneil) and EMD SCG-8006 (Jeneil). The flavorer may comprise or consist of any combination of EMC Mozzarella MZG-8518 (Jeneil) and EMD SCG-8006 (Jeneil). The various embodiments or thickener, acidifier and flavorer may be freely combined with each other to form the aseptic food product. Other ingredients are conceivable.

From the description above follows that, although various embodiments of the invention have been described and shown, the invention is not restricted thereto, but may also be embodied in other ways within the scope of the subject-matter defined in the following claims.

## Claims

1. A method for producing an aseptic food product, the method comprising
mixing (204), in a mixer unit (1), ingredients (11-15) into a mixture (M) comprising
- 20-35 wt% fat that comprises any combination of vegetable fat and milk based fat,
- 8-12 wt% milk protein,
- 0,5-3 wt% thickener,
- 0,5-2,5 wt% acidifier comprising or consisting of any combination of Glucono-Delta-Laction and citric acid,
- 0,5-4,5 wt% flavorer, and
- water that balances the mixture (M),
heat treating (206) the mixture (M) in a heat exchanger (3), such that a heat treated, aseptic mixture (AM) is obtained, and
filling (210) heat treated mixture (AM) in packages (6) that are aseptically sealed, such that the heat treated mixture (AM) forms an aseptic food product inside the package (6).

2. The method for producing a food product according to claim 1, wherein the mixture (M) is void of preservatives.

3. The method for producing a food product according to any preceding claim, wherein the mixture (M) is substantially lactose free.

4. The method for producing a food product according to any preceding claim, wherein the mixing (204) comprises supplying heat (205) through a heating jacket (16) of the mixer unit (1), such that the mixture (M) is given a temperature of 50 to 60°C.

5. The method for producing a food product according to any preceding claim, comprising providing (203) sub-atmospheric pressure inside the mixer unit (1) when introducing (202) into the mixer unit (1) ingredients that have powder form.

6. The method for producing a food product according to any preceding claim, wherein the heat exchanger (3) is a coil heat exchanger.

7. The method for producing a food product according to any preceding claim, wherein the heat treating (206) comprises rising (207) the temperature of the mixture (M) to a temperature of at least 135°C, at a rate of at least 4°C per second.

8. The method for producing a food product according to any preceding claim, wherein the heat treating (206) comprises decreasing (208) the temperature of the mixture (M), after the mixture (M) has reached a maximum temperature, at a rate that is less than 1°C per second.

9. The method for producing a food product according to any preceding claim, wherein the heat treating (206) comprises conveying (209) the mixture (M) through at least a part of the heat exchanger (3) at a pressure of at least 80 bar.

10. The method for producing a food product according to any preceding claim, wherein the mixer unit (1) comprises a tank (17), and a rotor (18) and a stator (19) that are arranged at a bottom (171) of the tank (17) to provide the mixing (204).

## Patentansprüche

1. Verfahren zur Herstellung eines aseptischen Lebensmittelprodukts, das Folgendes umfasst:
Mischen (204) von Bestandteilen (11-15) in einer Mischereinheit (1) zu einer Mischung (M), umfassend
- 20-35 Gew.-% Fett, das eine beliebige Kombination von Pflanzenfett und milchbasiertem Fett umfasst,
- 8-12 Gew.-% Milchprotein,
- 0,5-3 Gew.-% Verdicker,
- 0,5-2,5 Gew.-% Säuerungsmittel, das eine beliebige Kombination von Glucono-delta-lacton und Citronensäure umfasst oder daraus besteht,
- 0,5-4,5 Gew.-% Geschmacksstoff und
- Wasser, das die Mischung (M) ausbalanciert,
Wärmebehandeln (206) der Mischung (M) in einem Wärmetauscher (3), so dass eine wärmebehandelte, aseptische Mischung (AM) erhalten wird, und
Abfüllen (210) der wärmebehandelten Mischung (AM) in Packungen (6), die aseptisch versiegelt werden, so dass die wärmebehandelte Mischung (AM) ein aseptisches Lebensmittelprodukt in der Packung (6) bildet.

2. Verfahren zur Herstellung eines Lebensmittelprodukts nach Anspruch 1, wobei die Mischung (M) frei von Konservierungsstoffen ist.

3. Verfahren zur Herstellung eines Lebensmittelprodukts nach einem der vorhergehenden Ansprüche, wobei die Mischung (M) weitgehend lactosefrei ist.

4. Verfahren zur Herstellung eines Lebensmittelprodukts nach einem der vorhergehenden Ansprüche, wobei das Mischen (204) das Zuführen von Wärme (205) über einen Heizmantel (16) der Mischereinheit (1) umfasst, so dass der Mischung (M) eine Temperatur von 50 bis 60 °C verliehen wird.

5. Verfahren zur Herstellung eines Lebensmittelprodukts nach einem der vorhergehenden Ansprüche, umfassend das Bereitstellen (203) von Unterdruck in der Mischereinheit (1) beim Eintragen (202) von Bestandteilen in Pulverform in die Mischereinheit (1) .

6. Verfahren zur Herstellung eines Lebensmittelprodukts nach einem der vorhergehenden Ansprüche, wobei es sich bei dem Wärmetauscher (3) um einen Schlangenwärmetauscher handelt.

7. Verfahren zur Herstellung eines Lebensmittelprodukts nach einem der vorhergehenden Ansprüche, wobei das Wärmebehandeln (206) das Erhöhen (207) der Temperatur der Mischung (M) auf eine Temperatur von mindestens 135 °C mit einer Rate von mindestens 4 °C pro Sekunde umfasst.

8. Verfahren zur Herstellung eines Lebensmittelprodukts nach einem der vorhergehenden Ansprüche, wobei das Wärmebehandeln (206) das Verringern (208) der Temperatur der Mischung (M), nachdem die Mischung (M) eine Maximaltemperatur erreicht hat, mit einer Rate von weniger als 1 °C pro Sekunde umfasst.

9. Verfahren zur Herstellung eines Lebensmittelprodukts nach einem der vorhergehenden Ansprüche, wobei das Wärmebehandeln (206) das Befördern (209) der Mischung (M) durch mindestens einen Teil des Wärmetauschers (3) mit einem Druck von mindestens 80 bar umfasst.

10. Verfahren zur Herstellung eines Lebensmittelprodukts nach einem der vorhergehenden Ansprüche, wobei die Mischereinheit (1) einen Tank (17) und einen Rotor (18) und einen Stator (19), die am Boden (171) des Tanks (17) angeordnet sind, zur Bereitstellung des Mischens (204) umfasst.

## Revendications

1. Procédé pour la production d'un produit alimentaire aseptique, le procédé comprenant
le mélange (204), dans une unité de mélangeur (1), d'ingrédients (11 à 15) dans un mélange (M) comprenant
- 20 à 35 % en poids de graisse qui comprend une quelconque combinaison de graisse végétale et de graisse à base de lait,
- 8 à 12 % en poids de protéines de lait,
- 0,5 à 3 % en poids d'épaississant,
- 0,5 à 2,5 % en poids d'acidifiant comprenant ou constitué d'une quelconque combinaison de glucono-delta-lactone et d'acide citrique,
- 0,5 à 4,5 % en poids d'agent aromatisant, et
- de l'eau qui équilibre le mélange (M),
le traitement thermique (206) du mélange (M) dans un échangeur de chaleur (3), de sorte qu'un mélange traité thermiquement, aseptique (AM) soit obtenu, et
le remplissage (210) du mélange traité thermiquement (AN) dans des emballages (6) qui sont scellés de manière aseptique, de sorte que le mélange traité thermiquement (AM) forme un produit alimentaire aseptique à l'intérieur de l'emballage (6).

2. Procédé pour la production d'un produit alimentaire selon la revendication 1, le mélange (M) étant exempt de conservateurs.

3. Procédé pour la production d'un produit alimentaire selon une quelconque revendication précédente, le mélange (M) étant sensiblement exempt de lactose.

4. Procédé pour la production d'un produit alimentaire selon une quelconque revendication précédente, le mélange (204) comprenant l'apport de chaleur (205) par le biais d'une chemise de chauffage (16) de l'unité de mélangeur (1), de sorte que l'on donne une température de 50 à 60 °C au mélange (M).

5. Procédé pour la production d'un produit alimentaire selon une quelconque revendication précédente, comprenant l'application (203) d'une pression sousatmosphérique à l'intérieur de l'unité de mélangeur (1) lors de l'introduction (202) dans l'unité de mélangeur (1) d'ingrédients qui sont sous forme de poudre.

6. Procédé pour la production d'un produit alimentaire selon une quelconque revendication précédente, l'échangeur de chaleur (3) étant un échangeur de chaleur à serpentin.

7. Procédé pour la production d'un produit alimentaire selon une quelconque revendication précédente, le traitement thermique (206) comprenant l'élévation (207) de la température du mélange (M) jusqu'à une température d'au moins 135 °C, à une vitesse d'au moins 4 °C par seconde.

8. Procédé pour la production d'un produit alimentaire selon une quelconque revendication précédente, le traitement thermique (206) comprenant la diminution (208) de la température du mélange (M) après que le mélange (M) a atteint une température maximale, à une vitesse qui est inférieure à 1 °C par seconde.

9. Procédé pour la production d'un produit alimentaire selon une quelconque revendication précédente, le traitement thermique (206) comprenant l'acheminement (209) du mélange (M) à travers au moins une partie de l'échangeur de chaleur (3) à une pression d'au moins 80 bars.

10. Procédé pour la production d'un produit alimentaire selon une quelconque revendication précédente, l'unité de mélangeur (1) comprenant un réservoir (17), et un rotor (18) et un stator (19) qui sont agencés au niveau d'une partie inférieure (171) du réservoir (17) pour fournir le mélange (204).
